(19) Europäisches Patentamt
European Patent Office
Office européen des brevets

(11) Veröffentlichungsnummer: **0 362 563 A2**

(12) **EUROPÄISCHE PATENTANMELDUNG**

(21) Anmeldenummer: **89116408.9**

(22) Anmeldetag: **06.09.89**

(51) Int. Cl.5: **H01B 3/44 , C08L 23/10 , //(C08L23/10,C08K5:00)**

(30) Priorität: **15.09.88 DE 3831355**

(43) Veröffentlichungstag der Anmeldung: **11.04.90 Patentblatt 90/15**

(84) Benannte Vertragsstaaten: **DE FR IT**

(71) Anmelder: **HOECHST AKTIENGESELLSCHAFT**
**Postfach 80 03 20**
**D-6230 Frankfurt am Main 80(DE)**

(72) Erfinder: **Wilhelm, Thomas, Dr.**
**Bachstrasse 2**
**D-6204 Taunusstein 4(DE)**
Erfinder: **Schlögl, Gunter, Dr.**
**Finkenweg 2**
**D-6233 Kelkheim(DE)**
Erfinder: **Bothe, Lothar, Dr.**
**Am Heiligenhaus 9**
**D-6500 Mainz-Gonsenheim(DE)**
Erfinder: **Crass, Günther**
**Bachstrasse 7**
**D-6204 Taunusstein 4(DE)**

(54) **Hochleistungsdielektrikumsfolie mit verbesserter Thermostabilität.**

(57) Die extrudierte, biaxial orientierte Dielektrikumsfolie besteht aus hochreinem Elektrofolienrohstoff. Sie ist als Elektroisolierfolie, insbesondere als Dielektrikum in einem elektrischen Kondensator, geeignet und zeigt für diesen Zweck verbesserte dielektrische Eigenschaften. Die Folie enthält Propylenpolymere und Stabilisatoren für die Propylenpolymeren. Der Rohstoff der Folie besitzt eine idealisierte Thermooxidationstemperatur im Bereich von 260 bis 300 °C, vorzugsweise 260 bis 280 °C. Die Dielektrikumsfolie weist eine idealisierte Thermooxidationstemperatur von 250 bis 290 °C, insbesondere 250 bis 275 °C, auf. Der Gehalt an organischen Neutralisationsmitteln, insbesondere Calciumstearat, in dem Rohstoff ist kleiner/gleich 100 ppm.

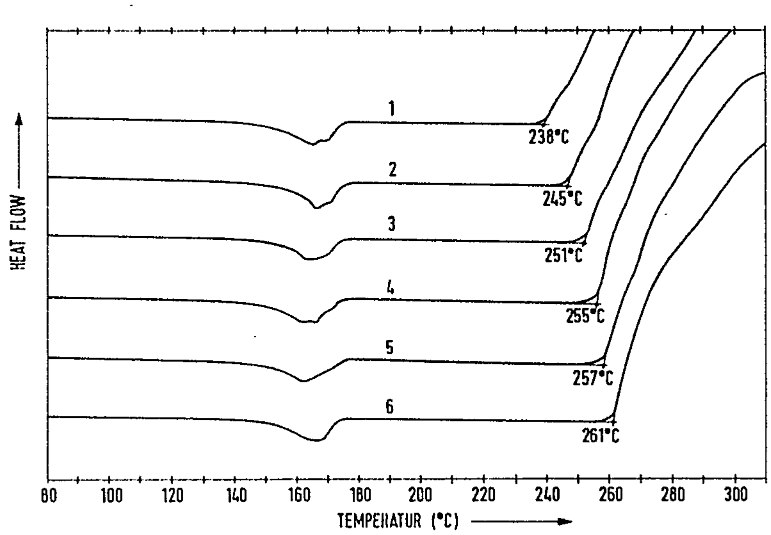


EP 0 362 563 A2

Xerox Copy Centre

## Hochleistungsdielektrikumsfolie mit verbesserter Thermostabilität

Die vorliegende Erfindung bezieht sich auf eine biaxial orientierte Dielektrikumsfolie aus hochreinem Elektrofolienrohstoff enthaltend Propylenpolymere und Stabilisatoren für die Propylenpolymeren. Die Erfindung bezieht sich ferner auf die Verwendung einer solchen Folie.

Der Einsatz von Kunststoffolien als Elektroisoliermaterial ist seit langem bekannt. Die betreffenden Folien werden sowohl als Dielektrikum in Kondensatoren als auch für Kabelisolierungen oder als selbstklebende Isolierbänder verwendet. Die Anforderungen an die elektrischen Isolationseigenschaften solcher Folien sind sehr hoch. Neben einem niedrigen dielektrischen Verlustfaktor und einer hohen Durchschlagfestigkeit wird eine genaue zeitliche Konstanz dieser Kenndaten gefordert, insbesondere gerade auch unter Betriebsbedingungen bei erhöhten Temperaturen.

Eine Reihe von Druckschriften beschäftigt sich mit biaxial orientierten Polypropylenfolien, die über eine besonders hohe Durchschlagfestigkeit verfügen sollen. Die gute Durchschlagfestigkeit wird meist durch Einsatz von Polypropylenrohstoffen erreicht, die ganz spezielle Eigenschaften besitzen sollen.

So wird in der EP-A-0 011 796 eine biaxial orientierte Polypropylenfolie zur Verwendung als Elektroisolierfolie beschrieben, die aus zwei Schichten besteht und in metal lisierter Form zur Herstellung von Kondensatoren verwendet wird. Der Rohstoff für diese Elektroisolierfolie ist hochreines Polypropylen mit einem Restaschebestandteil von weniger als 100 ppm, das frei von organischen oder anorganischen Gleitmitteln ist und keine ionogenen Bestandteile enthält.

Aus der EP-A-0 222 296 ist eine coextrudierte, biaxial orientierte Mehrschichtfolie bekannt geworden, bei der die Basisschicht ebenfalls aus hochreinem Elektrofolienrohstoff auf Basis von Propylenpolymeren besteht. Zur Verbesserung ihrer elektrischen Eigenschaften bei ihrer Verwendung als Dielektrikum in Kondensatoren soll der Stabilisatorgehalt der Deckschicht(en) wesentlich höher sein als der Stabilisatorgehalt der Basisschicht. Unter Stabilisatoren sind im Zusammenhang mit Elektroisolierfolien aus Kunststoffen spezielle Verbindungen zu verstehen, welche die Oxidationserscheinungen und damit die Zeitabhängigkeit des dielektrischen Verlustfaktors und der elektrischen Durchschlagfestigkeit verringern, wenn diese Folien als Dielektrikum in Verbindung mit dünnen Metallschichten als Elektroden in Kondensatoren eingesetzt werden. Trotz des komplizierten Mehrschichtaufbaus lassen die bekannten Folien immer noch in bezug auf die Konstanz ihrer Dielektrikumseigenschaften, insbesondere bei Langzeitbelastung unter Betriebsbedingungen bei erhöhten Temperaturen, zu wünschen übrig.

Der vorliegenden Erfindung liegt die Aufgabe zugrunde, eine Dielektrikumsfolie zu schaffen, die mehrere Bedin gungen gleichzeitig erfüllt. Die Folie soll einen möglichst einfachen Aufbau besitzen und damit beim Hersteller mit einem üblicherweise vertretbaren technischen Aufwand und damit preisgünstig herstellbar sein. Gleichzeitig soll sie einen niedrigen dielektrischen Verlustfaktor und hohe Durchschlagfestigkeit besitzen und ein verbessertes Langzeitverhalten in bezug auf die beiden genannten Parameter, worunter insbesondere die zeitliche Konstanz der Dielektrikumseigenschaften der Folie beim Langzeitbetrieb unter erhöhten Betriebstemperaturen zu verstehen ist.

Diese Aufgabe wird gelöst durch die Dielektrikumsfolie der eingangs genannten Gattung, deren kennzeichnende Merkmale darin bestehen, daß die idealisierte Thermooxidationstemperatur der Folie im Bereich von 250 bis 300 °C, vorzugsweise 250 bis 280 °C, liegt und daß der Gehalt an organischen Neutralisationsmitteln, insbesondere Calciumstearat, in dem Rohstoff kleiner/gleich 100 ppm ist. Die Aufgabe wird ferner gelöst durch die in Anspruch 12 genannte Verwendung.

Die erfindungsgemäße Dielektrikumsfolie wird aus einem hochreinen Rohstoff hergestellt, d. h. sie soll frei von Gleitmitteln sein und keine ionogenen Bestandteile enthalten. Der Staudinger-Index des Rohstoffs liegt zwischen 2,4 und 3,8 dl/g, bevorzugt zwischen 2,8 und 3,4 dl/g, sein Schmelzpunkt zwischen 160 und 168 °C. Vorzugsweise ist sein Restaschegehalt kleiner als 50 ppm, sein Chlorgehalt kleiner als 10 ppm und sein Gehalt an organischen Neutralisationsmitteln, insbesondere Calciumstearat, 0 bis 0,01 Gew.-%. Dieser Rohstoff ist mit einem geeigneten Stabilisatorsystem derartig stabilisiert, daß er eine idealisierte Thermooxidationstemperatur (gemessen mit einem Differentialkalorimeter bei einer Aufheizrate von 20 K/min) zwischen 260 und 300 °C, insbesondere 260 bis 280 °C, aufweist. Die Stabilisierung der Dielektrikumsfolie wird entsprechend den genannten zu erzielenden idealisierten Thermooxidationstemperaturen eingestellt, d. h. die notwendige Menge an Stabilisator (Konzentration) ist durch diese angestrebten Temperaturen vorgegeben, wird aber je nach Stabilisatortyp unterschiedlich sein. Im allgemeinen wird ein Stabilisatorgehalt von 1,2 Gew.-% nicht überschritten, vorzugsweise liegt er im Bereich von 0,3 bis 1,0 Gew.-%, besonders bevorzugt von 0,4 bis 0,8 Gew.-%, bezogen jeweils auf das Gesamtgewicht der Dielektrikumsfolie.

Die Bestimmung der idealisierten Thermooxidationstemperatur erfolgt auf folgende Weise:

2 bis 5 mg des zu untersuchenden Rohstoffs bzw. der zu untersuchenden Folie werden in einem Differentialkalorimeter mit einer Heizrate von 20 K/min aufgeheizt. Als Spülgas wird Luft verwendet, die Ausgangstemperatur ist 295 K. In der Zeichnung ist die Veränderung des Wärmeflusses ("heat flow") mit ansteigender Temperatur dargestellt. Während diese Kurve zunächst nahezu waagerecht verläuft (Basislinie), steigen diese Werte infolge Oxidation ab einer bestimmten Temperatur stark an (exothermer Ast). Die idealisierte Thermooxidationstemperatur wird wie in der Zeichnung gezeigt aus dem Schnittpunkt der den exothermen Ast des Thermogramms verlängernden Geraden mit der Basislinie bestimmt.

Überraschend wurde gefunden, daß die Folie mit der beschriebenen Zusammensetzung eine hohe zeitliche Konstanz des dielektrischen Verlustfaktors auch bei erhöhten Temperaturen und unter Betriebsbedingungen besitzt. Ebenso ist die Durchschlagfestigkeit sowohl bei Gleich- als auch bei Wechselspannungsbelastung sehr hoch und bleibt über einen langen Zeitraum auch bei erhöhten Temperaturen stabil. Entgegen den Erwartungen wurde gefunden, daß der dielektrische Verlustfaktor trotz der zur Erzielung der notwendigen Thermooxidationstemperaturen erforderlichen hohen Stabilisierung nicht unakzeptabel groß wird, insbesondere wenn der Rohstoff einen Aschegehalt kleiner 50 ppm, einen Chlorgehalt kleiner 10 ppm und einen Gehalt an organischen Neutralisationsmitteln wie Calciumstearat von 0 bis 0,01 Gew.-% aufweist.

Die Stabilisatoren der Dielektrikumsfolie sind aus den Stoffklassen der sterisch gehinderten Phenole oder Mischungen dieser Stoffe mit Phosphiten ausgewählt, wobei die ersten genannten Stoffklassen besonders bevorzugt sind. Insbesondere werden mehrkernige phenolische Stabilisatoren verwendet, deren Molmasse zweckmäßig größer als 300 g/Mol, insbesondere größer als 700 g/Mol, beträgt. Eine umfassende Zusammenstellung von Stabilisatoren für Polypropylen wird von T.J. Henman in der Publikation "World Index of Polyolefin Stabilizers", Kogan Page Ltd., London, 1982, gegeben.

Zur Herstellung der Dielektrikumsfolie wird die Schmelze des Polymeren durch eine Flachdüse extrudiert, die durch Extrusion erhaltene Folie durch Abkühlen verfestigt, anschließend bei einer Temperatur von beispielsweise 120 bis 150 °C im Verhältnis von 4:1 bis 7:1 längsgestreckt und bei einer Temperatur von beispielsweise 160 bis 170 °C im Verhältnis von 8:1 bis 10:1 quergestreckt. Zuletzt wird die biaxial gestreckte Folie beispielsweise bei 150 bis 165 °C thermofixiert. Die Verfahrensdurchführung erfolgt in der Weise, daß ihre Rauhigkeit $R_z$ kleiner/gleich 1,5 µm ist und insbesondere im Bereich von 0,07 bis 0,5 µm liegt (cut off 0,08 mm), wobei die beiden Oberflächen der Folie gleiche oder unterschiedliche Rauhigkeit aufweisen können.

Als Propylenpolymere können neben Polypropylen auch Polymermischungen aus Polypropylen und anderen Polyolefinen, insbesondere HDPE, LDPE, LLDPE oder Poly-4-methyl-penten-1, eingesetzt werden, wobei der Anteil der anderen Polyolefine gewöhnlich 15 Gew.-%, bezogen auf das Gesamtgewicht der Polymermischung, nicht übersteigt. Auch Blockcopolymere des Propylens, insbesondere mit Ethylen, oder statistische Copolymere des Propylens, insbesondere mit Ethylen, können vorteilhaft eingesetzt werden. Bei den Copolymeren beträgt die neben dem Propylen vorhandene Comonomer-Menge im allgemeinen maximal 10 Gew.-%, bezogen auf das Copolymer.

Der Einsatz der erfindungsgemäß hergestellten Folie erfolgt in Kondensatoren aus metallisierten Polypropylenfolien (MKP-Kondensatoren), bevorzugt in Kondensatoren für solche Anwendungen, bei denen eine hohe zeitliche Konstanz der elektrischen und dielektrischen Kennwerte auch bei erhöhten Temperaturen gefordert wird. Derartige Kondensatoren sind beispielsweise Hochleistungskondensatoren mit einer besonders kleinen, aber konstant zu haltenden Kapazität.

Die Erfindung wird durch die folgenden Beispiele näher erläutert. Die idealisierte Thermooxidationstemperatur des in den Beispielen verwendeten Rohstoffs wird durch Zusatz von 1,3,5-Trimethyl-2,4,6-tris (3,5-di-tert.-butyl-4-hydroxybenzyl)benzol (vgl. nachstehende Formel) als Stabilisator erreicht.

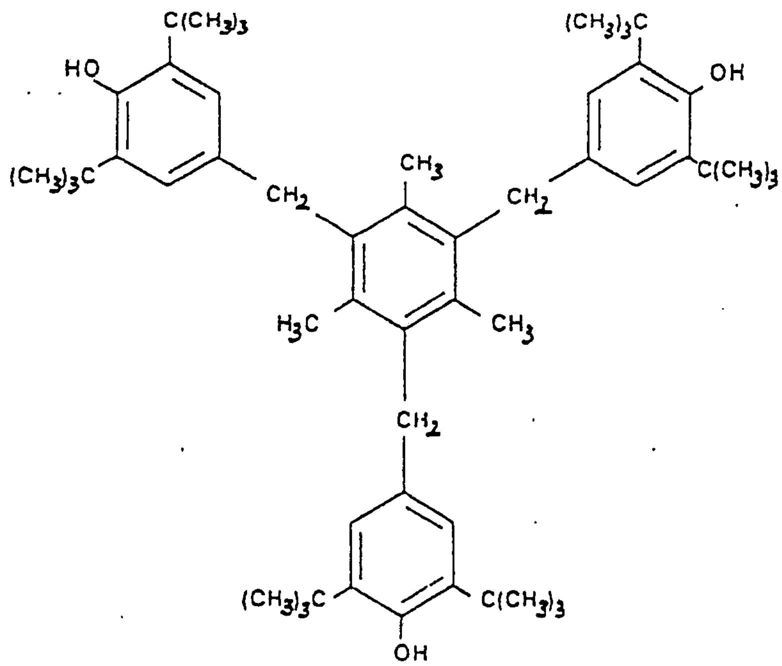

Aus der Tabelle I ergibt sich die Abhängigkeit der idealisierten Thermooxidationstemperatur vom Anteil dieses Stabilisators im Rohstoff. Der Stabilisatorgehalt ist in Gew.-%, bezogen auf das Gesamtgewicht des Rohstoffs, angegeben. Diese Abhängigkeit ist ferner im Diagramm dargestellt. In den folgenden Beispielen wurden Rohstoffe mit diesem Stabilisator eingesetzt. Die hergestellten Folien zeigen alle einschichtigen Aufbau, die Prozentangaben beziehen sich auf Gew.-%. Die in der Tabelle enthaltenen Angaben beziehen sich nur auf die Eigenschaften der Rohstoffe, Folien hergestellt aus diesen Rohstoffen weisen im allgemeinen andere Thermooxidationswerte auf.

Tabelle I

| Muster-Nr. | Stabilisatorgehalt (%) | idealisierte Thermooxidationstemperatur (°C) |
|---|---|---|
| 1 | 0,05 | 238 |
| 2 | 0,10 | 245 |
| 3 | 0,15 | 251 |
| 4 | 0,20 | 255 |
| 5 | 0,25 | 257 |
| 6 | 0,30 | 261 |
| 7 | 0,50 | 270 |

Beispiel 1

Zur Herstellung einer biaxial orientierten extrudierten Folie wurde ein Rohstoff aus Polypropylen mit einer idealisierten Thermooxidationstemperatur von etwa 261 °C verwendet. Der Chlorgehalt des Rohstoffs betrug 4 ppm, der Gehalt an Calciumstearat betrug 0,005 %. Der n-Heptan-lösliche Anteil betrug 4 %. Der Rohstoff wurde durch eine Flachdüse extrudiert, nach dem Abkühlen wurde die Vorfolie in Längsrichtung und anschließend in Querrichtung verstreckt und zuletzt thermofixiert. Die so erhaltene Folie hatte eine Gesamtdicke von 10 µm. Eine Coronabehandlung der Folie erfolgte nicht.
Die idealisierte Thermooxidationstemperatur der Folie betrug 259 °C.

Beispiel 2

Eine biaxial orientierte extrudierte einschichtige Folie wurde analog zu Beispiel 1 hergestellt. Der verwendete Rohstoff wies eine idealisierte Thermooxidationstemperatur von etwa 270 °C auf. Der Chlorgehalt des Rohstoffs betrug 4 ppm, der Gehalt an Calciumstearat war kleiner 0,01 %.
Die idealisierte Thermooxidationstemperatur der Folie betrug 268 °C.

Vergleichsbeispiel 1

Eine biaxial orientierte extrudierte einschichtige Folie wurde analog zu Beispiel 1 hergestellt. Der verwendete Rohstoff bestand aus Polypropylen und wies eine idealisierte Thermooxidationstemperatur von etwa 261 °C auf. Der Chlorgehalt betrug 40 ppm, der Gehalt an Calciumstearat 0,1 %.
Die idealisierte Thermooxidationstemperatur der Folie betrug 259 °C.

Vergleichsbeispiel 2

Eine biaxial orientierte extrudierte einschichtige Folie wurde analog zu Beispiel 1 hergestellt. Der verwendete Rohstoff bestand aus Polypropylen und wies eine idealisierte Thermooxidationstemperatur von etwa 238 °C auf. Der Chlorgehalt des Rohstoffs betrug 4 ppm, der Gehalt an Calciumstearat 0,005 %.
Die idealisierte Thermooxidationstemperatur der Folie betrug 228 °C.

Die elektrischen Kenngrößen der einzelnen Folien sind in der Tabelle II vergleichend gegenübergestellt.

Es bedeutet
DZ die Dielektrizitätszahl, gemessen bei 10 kHz,
tan $\delta$ den dielektrischen Verlustfaktor, gemessen bei 10 kHz,
DW den Durchgangswiderstand in der Einheit Ohm•cm,
$E_{D,O}$ die Gleichspannungsfestigkeit ohne Lagerung, Einheit kV/mm,
$E_{D,1000}$ die Gleichspannungsfestigkeit nach 1000 Stunden Lagerung bei 120 °C, Einheit kV/mm,
$\Delta E_D$ die Änderung der Gleichspannungsfestigkeit in Prozent.

Die Messungen von Dielektrizitätszahl, tan $\delta$ (gemessen bei 10 kHz) und Durchgangswiderstand wurden bei 120 °C durchgeführt, die Messung der Durchschlagfestigkeit bei 25 °C.

Wie aus der Tabelle II ersichtlich, weist die Folie des Vergleichsbeispiels 1 einen dielektrischen Verlustfaktor auf, der oberhalb der für Kondensatoranwendungen noch akzeptablen Grenze von $2{,}0 \cdot 10^{-4}$ liegt. Die dielektrischen Kenngrößen ebenso wie die Durchschlagfestigkeit der Folie des Vergleichsbeispiels 2 sind zwar hervorragend, verschlechtern sich jedoch nach Lagerung bei erhöhten Temperaturen signifikant.

Demgegenüber weisen die erfindungsgemäßen Beispiele 1 und 2 gute Werte sowohl vor als auch nach Lagerung über einen Zeitraum von 1 000 h bei 120 °C auf.

Die voranstehend beschriebene Dielektrikumsfolie wird als Dielektrikum in einem elektrischen Folienkondensator verwendet.

Tabelle II

| Elektrische Kenngrößen der hergestellten Folien | | | | | | |
|---|---|---|---|---|---|---|
| | DZ | tan $\delta$ | DW | $E_{D,O}$ | $E_{D,1000}$ | $\Delta E_D$ |
| Beispiel 1 | 2,23 | $1{,}4 \cdot 10^{-4}$ | $1{,}5 \cdot 10^{16}$ | 713 | 650 | 8,8 |
| Beispiel 2 | 2,21 | $1{,}1 \cdot 10^{-4}$ | $5{,}7 \cdot 10^{15}$ | 688 | 652 | 5,2 |
| Vergleichsbeispiel 1 | 2,23 | $3{,}7 \cdot 10^{-4}$ | $2{,}3 \cdot 10^{16}$ | 544 | 530 | 2,5 |
| Vergleichsbeispiel 2 | 2,24 | $0{,}9 \cdot 10^{-4}$ | $4{,}5 \cdot 10^{15}$ | 662 | 491 | 25,8 |

## Ansprüche

1. Biaxial orientierte Dielektrikumsfolie aus hochreinem Elektrofolienrohstoff enthaltend Propylenpolymere und Stabilisatoren für die Propylenpolymeren, dadurch gekennzeichnet, daß die idealisierte Thermooxidationstemperatur der Folie im Bereich von 250 bis 300 °C, vorzugsweise 250 bis 280 °C, liegt und daß der Gehalt an organischen Neutralisationsmitteln, insbesondere Calciumstearat, in dem Rohstoff kleiner/gleich 100 ppm ist.

2. Dielektrikumsfolie nach Anspruch 1, dadurch gekennzeichnet, daß der Stabilisatorgehalt in dem Rohstoff kleiner/gleich 1,2 Gew.-%, bezogen auf das Gewicht der Dielektrikumsfolie ist.

3. Dielektrikumsfolie nach Anspruch 2, dadurch gekennzeichnet, daß sie einen Stabilisatorgehalt im Bereich von 0,3 bis 1,0 Gew.-%, vorzugsweise von 0,4 bis 0,8 Gew.-%, besitzt.

4. Dielektrikumsfolie nach einem der Ansprüche 1 bis 3, dadurch gekennzeichnet, daß der Rohstoff für die Folie aus hochreinem Polypropylen oder aus einer Polymermischung von Polypropylen und anderen Polyolefinen, insbesondere HDPE, LDPE, LLDPE oder Poly-4-methyl-penten-1, oder aus Blockcopolymeren oder statistischen Copolymeren des Propylens, insbesondere mit Ethylen, besteht.

5. Dielektrikumsfolie nach einem der Ansprüche 1 bis 4, dadurch gekennzeichnet, daß die Stabilisatoren für den Rohstoff aus den Stoffklassen der sterisch gehinderten Phenole und/oder Phosphite ausgewählt sind.

6. Dielektrikumsfolie nach Anspruch 5, dadurch gekennzeichnet, daß das sterisch gehinderte Phenol eine Molmasse größer als 300 g/Mol, insbesondere größer als 700 g/Mol, aufweist.

7. Dielektrikumsfolie nach einem der Ansprüche 1 bis 6, dadurch gekennzeichnet, daß ihr Restaschegehalt kleiner als 50 ppm ist.

8. Dielektrikumsfolie nach einem der Ansprüche 1 bis 7, dadurch gekennzeichnet, daß ihr Chlorgehalt kleiner als 10 ppm ist.

9. Dielektrikumsfolie nach einem der Ansprüche 1 bis 8, dadurch gekennzeichnet, daß ihre Dicke 3 bis 30 µm, bevorzugt 4 bis 15 µm, beträgt.

10. Dielektrikumsfolie nach einem der Ansprüche 1 bis 9, dadurch gekennzeichnet, daß ihre Oberflächenrauhigkeit $R_z$ kleiner/gleich 1,5 µm ist und insbesondere im Bereich von 0,07 bis 0,5 µm liegt und daß ihre beiden Oberflächen gleiche oder unterschiedliche Rauhigkeit aufweisen.

11. Dielektrikumsfolie nach einem der Ansprüche 1 bis 10, gekennzeichnet durch eine zusätzliche äußere Metallschicht.

12. Verwendung der Dielektrikumsfolie nach einem der Ansprüche 1 bis 11 als Elektroisolierfolie, insbesondere als Dielektrikum in einem elektrischen Folienkondensator.

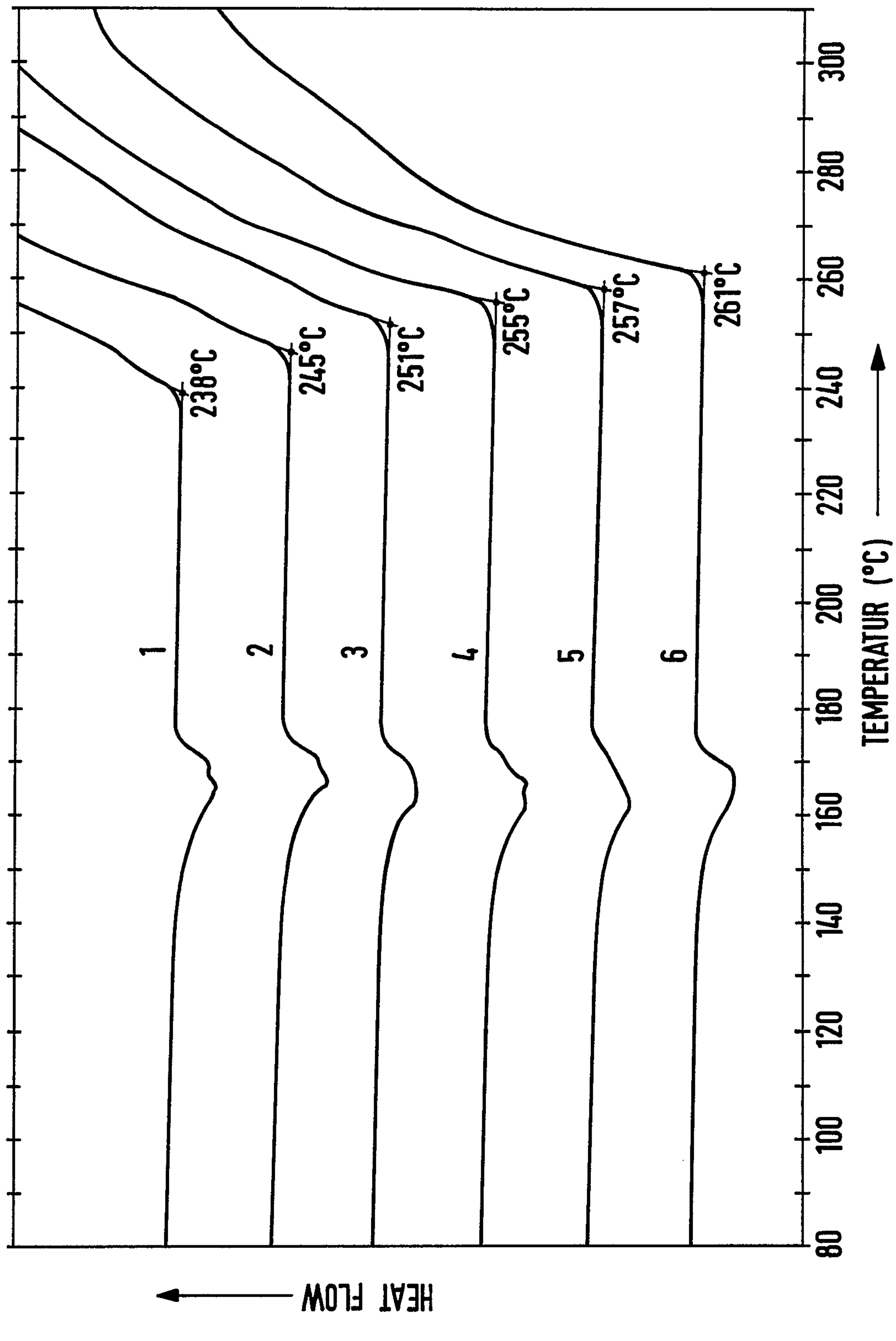


HOECHST AKTIENGESELLSCHAFT
88/K 056